# EUROPÄISCHE PATENTSCHRIFT

(11) **EP 1 284 034 B1**
(45) Veröffentlichungstag und Bekanntmachung des Hinweises auf die Patenterteilung: **09.06.2010**
(21) Anmeldenummer: 01917064.6
(22) Anmeldetag: 05.03.2001
(51) Int. Cl.: H01R 25/14

(54) **STROMSCHIENENSYSTEM**
CONDUCTOR RAIL SYSTEM
SYSTEME DE BARRE OMNIBUS

(30) Priorität: 24.05.2000 DE 10025646
(43) Veröffentlichungstag der Anmeldung: 19.02.2003
(60) Teilanmeldung: 08164410.6
(73) Patentinhaber: Zumtobel Lighting GmbH, 6850 Dornbirn (AT)
(72) Erfinder: LADSTÄTTER, Gerald, A-6833 Klaus (AT); GADNER, Wolfgang, A-6912 Hörbranz (AT)
(74) Vertreter: Schmidt-Evers, Jürgen
(86) Internationale Anmeldenummer: PCT/EP2001/002467
(87) Internationale Veröffentlichungsnummer: WO 2001/091249

(56) Entgegenhaltungen:
- EP-A- 0 312 871
- EP-A- 0 344 703
- DE-A- 19 539 958
- DE-U- 8 211 526
- US-A- 3 181 102
- US-A- 3 832 673

## Beschreibung

Die vorliegende Erfindung betrifft ein Stromschienensystem für Leuchten nach dem Oberbegriff des Anspruches 1 bzw. ein Kontaktierungselement zum Anschließen einer Leuchte an ein derartiges Stromschienensystem.

Stromschienensysteme oder Lichtbänder finden in vielfältiger Form Verwendung, da sie gegenüber fest installierten oder eingebauten Leuchten eine hohe Flexibilität bei der individuellen Planung von Beleuchtungsstrukturen für spezifische Anforderungen bieten. So bestehen die Stromschienensysteme aus mehreren einzelnen Elementen, die nach dem Baukasten-Prinzip zusammengesetzt werden, so daß die gesamte Anordnung an die zu beleuchtenden Räumlichkeiten angepaßt werden kann. Es sind Lichtbandsysteme bekannt, mit denen nicht nur zweidimensionale, sondern auch dreidimensionale Strukturen gebildet werden können.

Das Grundgerüst eines Stromschienensystems wird durch Tragschienen gebildet, die zu der gewünschten Struktur zusammengesetzt werden und der Halterung der Stromversorgungs- und Steuerleitungen sowie der einzelnen Leuchten dienen. Die Tragschienen müssen daher eine hohe Stabilität besitzen und bestehen üblicherweise aus Metall. Sie können unterschiedliche Formen aufweisen, beispielsweise sind Tragschienen mit einem Y-Profil oder einem A-Profil bekannt. Am weitesten verbreitet sind allerdings U-förmige Tragschienen, welche mit ihrem Mittelschenkel an einem Träger, z.B. einer Raumdecke oder Raumwand befestigt werden. An den Tragschienen werden die einzelnen Leuchten-Module befestigt, wobei üblicherweise die Länge einer einzelnen Tragschiene ein Vielfaches der Länge der Leuchten-Module beträgt. Beispielsweise werden Tragschienen mit einer Länge von 3 m oder 4,50 m angeboten, wenn die Leuchten-Module eine Länge von 1,50 aufweisen. Derartige ganzzahlige Längenverhältnisse werden gewählt, um die Planung bei der Gestaltung eines Lichtbandsystems zu vereinfachen.

Um die Stromversorgung für die Leuchten sicher zu stellen, verlaufen an oder innerhalb der Tragschienen entsprechende Leitungen. Zusätzlich können neben den Leitungen zur Stromversorgung auch weitere Leitungen für die Übertragung von Steuersignalen vorgesehen sein, wodurch sich die Möglichkeit eröffnet, bei Verwendung eines geeigneten Steuersystems die einzelnen Leuchten individuell anzusteuern und zu dimmen.

Bei einem bekannten Lichtbandsystem, das von der Anmelderin unter der Bezeichnung "Lichtbandsystem ZX" vertrieben wird, verlaufen die Leitungen in Form einer Durchgangsverdrahtung innerhalb der U-förmigen Tragschienen, wobei in regelmäßigen Abständen, die der Länge der Leuchten-Module entsprechen, Abgriffbuchsen angeordnet sind. Die Abgriffbuchsen werden in die Tragschienen eingeklemmt, wobei Hinterschneidungen entsprechende nach innen gerichtete Vorsprünge der Tragschienen hintergreifen. An den durch die Abgriffbuchsen vorgegebenen Stellen können die Leuchten-Module montiert werden, indem sie auf die nach unten offenen Tragschienen aufgesetzt und befestigt werden. Die Kontaktierung der Leitungen erfolgt über ein an den Leuchten-Modulen befindliches Kontaktierungselement, welches Anschlußkontakte aufweist, die beim Aufsetzen des Leuchten-Moduls auf die Tragschiene in Öffnungen der Abgriffbuchse eingreifen und dabei mit den entsprechenden Drähten in Kontakt treten. Ferner weisen die Leuchten-Module Drehknebel auf, welche nach dem Aufsetzen verdreht werden und dabei für eine mechanische Befestigung an den Tragschienen sorgen.

Bei dem eben beschriebenen Stromschienensystem können die Leuchten-Module jeweils nur an den Stellen angeordnet werden, die durch die Abgriffbuchsen vorgegeben sind, da andernfalls keine elektrische Kontaktierung möglich ist. Um solche Einschränkungen zu vermeiden und damit eine größere Flexibilität für der Anordnung der einzelnen Leuchten zu erhalten, wurden Stromschienensysteme entwickelt, welche ein von den Tragschienen gehaltenes Stromleitprofil aufweisen. Dieses Stromleitprofil besteht aus länglichen Körpern aus nicht-leitendem Material - üblicherweise Kunststoff - mit in Längsrichtung der Tragschienen verlaufenden und von einer Kontaktierungsseite her zugänglichen Nuten zur Aufnahme von Drähten für die Stromversorgung und/oder Übertragung von Steuersignalen. Da in diesem Fall die nicht-isolierten Drähte zumindest über die Länge eines einzelnen Stromleitprofil-Körpers zu der Kontaktierungsseite hin offen liegen, kann innerhalb dieses Bereichs eine Leuchte an beliebiger Stelle angeordnet werden, so daß eine größere Freiheit bei der Planung und Realisierung des Lichtbandsystems besteht.

Ein derartiges Stromschienensystem mit U-förmigen Tragschienen, an deren Seitenwänden in Längsrichtung Stromleiter verlaufen, ist aus der DE 197 06 865 A1 bekannt. Die in unterschiedlicher Höhe angeordneten Stromleiter haben unterschiedliche Funktion. Beispielsweise können einige der Leiter zum Anschließen der Leuchten an ein Standardnetz verwendet werden, während andere Stromleiter Bestandteil eines Notstrom-Versorgungssystems sind. Durch eine entsprechende Kontaktierung dieser Stromleiter kann somit einer an das Stromschienensystem angeschlossenen Leuchte eine bestimmte Funktion zugewiesen werden. In der DE 197 06 865 A1 erfolgt dabei das Kontaktieren mit Hilfe eines Adapters, der in die Öffnung der Tragschiene von unten eingeschoben und anschließend um ca. 90° verdreht wird. An der Außenseite des Adapters sind Kontaktstifte vorgesehen, welche durch das Verdrehen gegen die Drähte des Stromschienensystems in Anlage gebracht werden. Um eine wahlweise Kontaktierung der verschiedenen Drähte zu ermöglichen, besitzt der Adapter in unterschiedlichen Höhen angeordnete Öffnungen, in welche die Kontaktstifte eingesetzt werden können. Dies bedeutet, daß zum Wechseln der gewünschten Kontaktierung für eine Leuchte die Kontaktstifte zunächst ausgebaut und anschließend wieder neu eingesetzt werden müssen, was relativ aufwendig ist.

Eine flexiblere Kontaktierung der verschiedenen Drähte einer U-förmigen Tragschiene wird durch einen in der EP 0 344 703 A2 beschriebenen Adapter ermöglicht. Dieser weist mehrere Kontaktstifte auf, wobei einer dieser Stifte in seiner Höhe verstellbar ist. Im Gegensatz zu dem zuvor beschriebenen Adapter müssen hier somit nicht Kontaktierungsstifte jeweils ausgebaut und wieder eingesetzt werden, um eine unterschiedlichen Phasenwahl vorzunehmen. Vielmehr ist ein einfaches Verschieben des Kontaktierungsstiftes ausreichend.

Um einen störungsfreien Betrieb der an das Stromschienensystem angeschlossenen Leuchten zu gewährleisten, ist eine zuverlässige Erdung der Leuchten unerläßlich. Der aus der EP 0 344 703 A2 bekannte Adapter weist hierzu sog. Erdkontaktklappen auf, welche durch ein mehrfach abgewinkeltes Blechteil gebildet sind, das federnd gelagert ist und beim Einführen des Adapters den entsprechenden Erdschutzleiter des Stromschienensystems kontaktiert. Diese bekannte Konstruktion ist verhältnismäßig aufwendig, so dass ein Bedarf an einer Vereinfachung des Mechanismus zur Erdung der Leuchten besteht.

Es ist daher Aufgabe der vorliegenden Erfindung, eine Technik bereitzustellen, die eine einfache und kostengünstige Erdung von an ein Stromschienensystem angeschlossenen Leuchten ermöglicht.

Die Aufgabe wird durch ein Stromschienensystem, welches die Merkmale des Anspruches 1 aufweist, bzw. durch ein Kontaktierungselement gemäß dem Anspruch 14 gelöst. Das an einem Leuchten-Modul vorgesehene erfindungsgemäße Kontaktierungselement weist dabei mehrere Anschlußkontakte auf, wobei das Kontaktierungselement von der offenen Seite her in die Tragschiene einzuführen und anschließend teilweise zu verdrehen ist. Durch das Verdrehen werden die Anschlußkontakte in die Nuten des Stromleitprofils eingeführt und mit den Drähten in Kontakt gebracht, wobei zumindest einer der Anschlußkontakte verstellbar ist. Zur Erdung des Leuchten-Moduls ist ein Drahtelement vorgesehen, das zum einen in Kontakt mit der Leuchte bzw. dem Leuchten-Modul ist und zum anderen nach dem Verdrehen des Kontaktierungselements gegen den zur Erdung vorgesehenen Draht gepreßt wird. Erfindungsgemäß ist das Drahtelement in einem Schlitz des Kontaktierungselements geführt, der einen exenterförmigen Anschlag bildet und während dem Verdrehen des Kontaktierungselements das andere Ende des Drahtelements gegen den zur Erdung vorgesehenen Draht des Stromschienensystems preßt.

Die erfindungsgemäße Lösung zeichnet sich durch ihren einfachen Aufbau aus, durch den zum einen die Herstellungskosten gesenkt und zum anderen Fehlfunktionen ausgeschlossen werden können.

Weiterbildungen der Erfindung sind Gegenstand der Unteransprüche.

Beispielsweise können an dem Kontaktierungselement Verriegelungselemente vorgesehen sein, welche bei dem Verdrehen und Kontaktieren der Drähte zusätzlich hervorstehende Teile der Tragschiene hintergreifen, wodurch gleichzeitig eine mechanische Befestigung an der Tragschiene ermöglicht wird. Auf diese Weise kann mit Hilfe eines einfachen Handgriffs sowohl eine elektrische Kontaktierung als auch eine mechanische Befestigung des Leuchten-Moduls durchgeführt werden. Ferner kann vorgesehen sein, daß der höhenverstellbare Anschlußkontakt in den den verschiedenen Drähten entsprechenden Positionen leicht einrasten kann, wodurch eine Positionierung des Kontakts für die gewünschte Kontaktierung erleichtert wird. Vorzugsweise wird das Kontaktierungselement zum Anschließen des Leuchten-Moduls um 45 ° verdreht.

Eine andere Weiterbildung der Erfindung betrifft das innerhalb der U-förmigen Tragschiene angeordnete Stromleitprofile zur Halterung der Drähte. Üblicherweise wird dieses aus einem einstückigen Stromleitprofil-Körper gebildet, der mittels Extrusion hergestellt wird. Dieses Verfahren ist insofern von Nachteil, als damit Kunststoffteile lediglich mit einer begrenzten Präzision hergestellt werden können, da sich der Kunststoff nach dem Verlassen der Extrusionsdüse sehr schnell abkühlt und seine Form verändert. Dies hat zur Folge, daß einstückige Stromleitprofil-Körper nur bis zu einer gewissen Komplexität hergestellt werden können und längere Stromleitprofil-Körper nur sehr kostenintensiv herzustellen sind. Ferner ist es notwendig, Stromleitprofil-Körper in den entsprechenden Größen der einzelnen Tragschienen anzubieten, wodurch die Gesamtkosten für das Stromschienensystem erhöht werden, da eine Vielzahl von Teilen zur Verfügung gestellt werden muß. Darüber hinaus ist es erforderlich, beim Zusammensetzen zweier Tragschienen die beiden Stromleitprofile miteinander zu verbunden, wobei diese Verbindung insofern problematisch ist, als in diesem Bereich gewährleistet sein muß, daß keine unbeabsichtigte Berührung eines Drahtes möglich ist. Eine entsprechende Norm hierzu fordert, daß ein 1mm - dicker Prüfdraht in Geradeaus-Dehnung nicht aus einen der Drähte treffen kann. Üblicherweise erfolgt die Verbindung mit Hilfe eines sog. Reihenverbinders, der selbst allerdings keine Kontaktierungsmöglichkeit bietet, was zur Folge hat, daß innerhalb des Verbindungsbereichs zwischen zwei Tragschienen keine Kontakderungsmöglichkeit besteht.

Die Weiterbildung der vorliegenden Erfindung gibt daher eine Möglichkeit an, ein Stromleitprofil sehr kostengünstig herzustellen und dieses in seiner Länge auf einfache Weise an die Länge einer Tragschiene anzupassen. Dies wird dadurch ermöglicht, daß das von einer einzelnen Tragschiene gehaltene Stromleitprofil aus mindestens zwei aneinandergefügten Drahthalterungselementen aus nicht-leitendem-Material besteht, welche die Nuten zur Aufnahme der Drähte anweisen. Die Drahthalterungselemente sind dabei in ihren Endbereichen derart ausgebildet, daß sie beim Aneinanderfügen mit an ihren Enden befindlichen Vorsprüngen derart überlappend ineinandergreifen, daß sie in dem Verbindungsbereich zwischen zwei Drahthalterungselementen den Nuten entsprechende und zu der Kontaktienmgsseite hin offene Kanäle bilden. Diese Kanäle sind lediglich von der Kontaktierungsseite her zugänglich, ansonsten jedoch wie auch die Nuten der Drahthalterungselemente umschlossen, so daß die zuvor erwähnte Sicherheitsnorm auch in diesen Bereichen erfüllt ist. Somit wird über die gesamte Länge einer Tragschiene hinweg eine durchgängige aber sichere Kontaktierungsmöglichkeit geschaffen.

Durch das modulare Zusammenfügen des Stromleitprofils aus mehreren einzelnen Drahthalterungselementen besteht die Möglichkeit, Tragschienen unterschiedlichster Längen anzubieten, zu deren Bestückung mit einem Stromleitprofil allerdings lediglich Drahthalterungselemente einer einzigen Länge zu verwenden, da das Stromleitprofil lediglich durch eine Veränderung der Anzahl der Drahthalterungselemente an die Länge der Tragschiene angepaßt werden kann. Dies hat einen deutlich niedrigeren Produktionsaufwand zur Folge. Ferner müssen keine langgezogenen und teuer herzustellenden einstückigen Kunststoffteile erstellt werden. Die Drahthalterungselemente können beispielsweise mittels dem wesentlich leichter zu beherrschenden und kostengünstigeren Spritzgußverfahren erzeugt werden.

Bei aus Kunststoffteilen bestehenden Stromleitprofilen ist insbesondere zu beachten, daß diese einer nicht zu vernachlässigenden Wärmestrahlung ausgesetzt sein können, insbesondere in der Nähe von an oder besonders in den Tragschienen angeordneten Vorschaltgeräten für die Leuchten. Dies hat zur Folge, daß sich die Kunststoffteile ausdehnen bzw. bei Nichtbestrahlung zusammenziehen können. Dabei ist besonders problematisch, daß der Ausdehnungskoeffizient von Kunststoff ca. 10x größer ist als der von Metall, so daß sich die einzelnen Drahthalterungselemente in ihrer Länge deutlich verändern können, während hingegen die von dem Stromleitprofil gehaltenen Drähte nahezu gleichlang bleiben. Aus diesem Grund können die Drahthalterungselemente an ihren Enden Verriegelungselemente aufweisen, welche beim Zusammensetzen zweier Drahthalterungselemente ineinandergreifen und eine Verschiebung oder Entfernung in Längsrichtung auf ein vorbestimmtes Bewegungsspiel begrenzen. Kühlen die Drahthalterungselemente ab und ziehen sich zusammen, so entfernen sie sich bis zu einer vorgegebenen Maximalentfernung, bei der immer noch der Berührungsschutz gegeben ist; werden sie erhitzt, nähern sie sich aneinander an. Auf diese Weise wird temperaturunabhängig ein durchgängiges Stromleitprofil gebildet. Vorzugsweise haben die Drahthalterungselemente eine Länge von ca. 500 mm, wobei das erlaubte Spiel, mit dem sich zwei aneinander grenzende Drahthalterungselemente gegeneinander verschieben können, ca. 8 mm beträgt, was für die in dem Stromschienensystem üblicherweise auftretenden Temperaturunterschiede ausreichend ist.

Durch das Bilden des Stromleitprofils aus einer Vielzahl von aneinander gereihten Drahthalterungselementen ist die Möglichkeit gegeben, über eine beliebige Länge hinweg, eine durchgängige Kontaktierungsmöglichkeit zu schaffen, in den das Stromleitprofil nach dem Zusammenschluß der Tragschienen in diese eingesetzt wird. Aus Gründen einer einfachen Montage werden allerdings die Tragschienen üblicherweise bereits fertig bestückt, d.h. mit einem bereits eingesetzten Stromleitprofil mit den darin angeordneten Drähten verkauft. Dies aus dem Grund, da es beim Erstellen eines Lichtbandsystems einfacher ist, die bereits fertig bestückten Tragschienen zusammenzusetzen, als zunächst leere Tragschienen aneinanderzufügen und anschließend die Stromleitprofile einzusetzen. Somit ergibt sich wiederum das Problem, daß zwischen zwei Tragschienen eine Schnittstelle auftritt, an der die Drähte zweier Stromleitprofile miteinander verbunden werden müssen.

Eine andere Weiterbildung der Erfindung betrifft daher ein Verbindungselement, welches auch an diesen Schnittstellen eine Kontaktierungsmöglichkeit bildet. Im Gegensatz zu dem bekannten Reihenverbinder weist das Verbindungselement von der Kontaktierungsseite und den beiden Stirnseiten her zugängliche rillenförmige Ausnehmungen auf, welche den Nuten der Stromleitprofile entsprechen, wobei in die Ausnehmungen jeweils ein Metallverbinder eingesetzt ist, an den die miteinander zu verbindenden Drähte von beiden Seiten her anschließbar sind. Dieses ebenfalls aus einem nicht-leitenden Material bestehende Verbindungselement schließt die Lücke zwischen den Stromleitprofilen zweier Tragschienen und stellt sicher, daß über die gesamte Länge des Stromschienensystems hinweg ein Leuchten-Modul befestigt und an die Leitungen des Stromschienensystems angeschlossen werden kann, da die Metallverbinder in dem Übergangsbereich die Kontaktierungsflächen für die Anschlußkontakte des Leuchten-Moduls bilden. Vorzugsweise weisen die Metallverbinder eine längliche Kontaktierungsplatte sowie an beiden Enden davon angeordnete U-förmige Federelemente auf, durch welche die Drähte beim Einführen verklemmt und gegen die Kontaktierungsplatte gedrückt werden. Gleichzeitig wird durch die Federelemente gewährleistet, daß sich die Drähte bei einer Wärmeausdehnung der Drahthalterungselemente nicht pumpenartig verschieben und möglicherweise sogar auswandern können. Bei U-förmigen Tragschienen, bei denen an beiden Seitenwänden Stromleitprofile angeordnet sind, erfolgt eine mechanische Verbindung zweier benachbarter Tragschienen vorzugsweise mit Hilfe einer kurzen U-förmigen Verbindungsschiene, welche jeweils zur Hälfte in beide Tragschienen eingreift und an deren Seitenschenkel die Verbindungselemente angeordnet sind.

Im folgenden soll die vorliegende Erfindung anhand der beiliegenden Zeichnung näher erläutert werden. Es zeigen:
Fig. 1 die Tragschiene eines Stromschienensystems mit einem eingesetzten erfindungsgemäßen Kontaktierungselement im Schnitt;
Fig. 2 die in Fig. 1 dargestellte Tragschiene ohne das Kontaktierungselement im Schnitt;
Fig. 3 ein Drahthalterungselement in perspektivischer Darstellung;
Fig. 4 das in Fig. 3 dargestellte Drahthalterungselement im Schnitt;
Fig. 5 den Übergangsbereich zwischen zwei zusammengesetzten Drahthalterungselementen von der Kontaktierungsseite her;
Fig. 6 den Übergangsbereich zwischen zwei Drahthalterungselementen von der Rückseite her;
Fig. 7 die Anordnung eines Verbindungselements und einer Verbindungsschiene zum Verbinden zweier Tragschienen;
Fig. 8 den Aufbau des Verbindungselements;
Fig. 9a einen in dem Verbindungselement verwendeten Metallverbinder;
Fig. 9b ein Federelement des in Fig. 9a dargestellten Metallverbinders; und
Fig. 10 das in Fig. 1 dargestellte Kontaktierungselement in perspektivischer Darstellung.

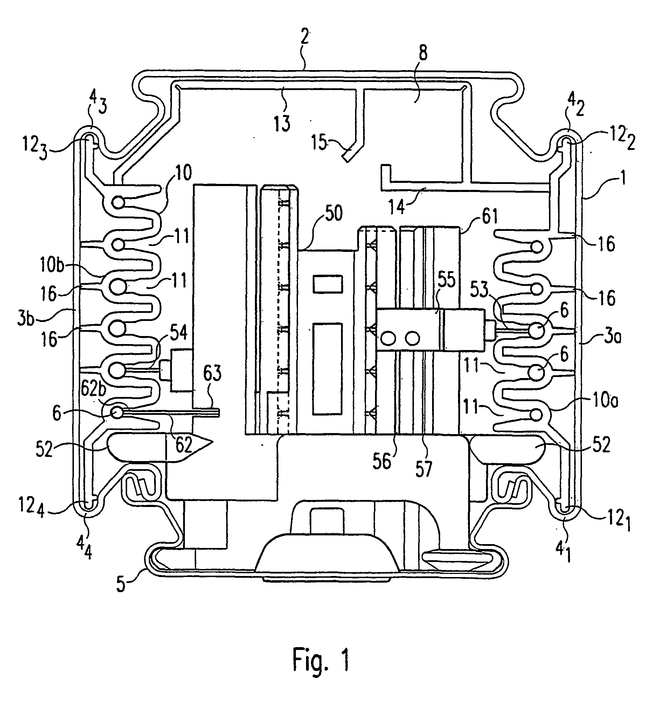

Basiselement des in Fig. 1 dargestellten Stromschienensystems ist eine aus Metall bzw. Blech bestehende U-förmige Tragschiene 1, welche mit ihrem Mittelschenkel 2 durch nicht dargestellte Befestigungsmittel an einem Träger, z.B. einer Raumdecke oder einer Raumwand befestigbar ist. Die Abdeckung der offenen unteren Seite der Tragschiene 1 erfolgt durch eine Abdeckschiene 5. Im dargestellten Fall ist diese Abdeckschiene 5 Bestandteil eines an der Tragschiene 1 befestigten Leuchten-Moduls, wobei in Fig. 1 lediglich das Kontaktierungselement des Leuchten-Moduls in Form eines Drehabgriffs 50 dargestellt ist, nicht allerdings dessen weiteren Bestandteile, beispielsweise die Lampe oder das dazugehörige Steuer- bzw. Betriebsgerät, bei dem es sich um ein elektronisches Vorschaltgerät (EVG) handeln kann. Der Innenraum der Tragschiene 1 dient in diesem Fall dann auch als Aufnahmeraum für die Betriebsgeräte der Lampen. Diejenigen Bereiche der Tragschiene 1, an denen keine Leuchten-Module angeordnet sind, können aus optischen und Sicherheitsgründen ebenfalls mit einer Abdeckschiene 5 verschlossen werden, wobei das Befestigen der Abdeckschiene 5 mittels Verklemmen oder Verrasten erfolgt.

Im vorliegenden Beispiel sind an den Innenseiten der beiden Seitenwände 3a und 3b der Tragschiene 1 Stromleitprofile angeordnet, welche durch mehrere aus Kunststoff bestehende und zusammengesetzte Drahthalterungselemente 10 gebildet werden, die jeweils zwei Seitenflügel 10a und 10b mit mehreren Nuten 11 zur Aufnahme der Drähte 6 enthalten. Dabei sind in dem rechten Seitenflügel 10a fünf Drähte 6 angeordnet, während auf der linken Seite sechs Drähte 6 verlaufen.

Die in dem rechten Seitenflügel 10a angeordneten Drähte 6 können in der Reihenfolge von oben nach unten beispielsweise folgende Funktion haben.
Notstrom 1
Notstrom 2
Neutralleiter vom Standardnetz
D1 = Steuerleitung für Lichtsteuerung
D2 = Steuerleitung für Lichtsteuerung.

Die Funktionen der in dem linken Seitenflügel 10b angeordneten Drähte 6 sind beispielsweise:
Phase von Notstrom 1
Phase von Notstrom 2
Standardphase 3
Standardphase 2
Standardphase 1
Erde.

Sowohl die Anzahl der verwendeten Drähte sowie deren Anordnung und Funktion ist lediglich beispielhaft dargestellt und kann den individuellen Bedürfnissen angepaßt werden.

Durch eine Kontaktierung der entsprechenden Drähte 6 kann der angeschlossenen Leuchte eine gewünschte Funktion zugewiesen werden, beispielsweise kann die Leuchte als Notlichtleuchte verwendet werden. Durch das Verwenden der beiden Steuerleitungen für die Lichtsteuerung besteht die Möglichkeit, mit diesen beiden Leitungen ein Bussystem zu bilden, über das eine Vielzahl von Leuchten mit Hilfe von digitalen Steuerbefehlen angesteuert werden kann, wie dies von komplexeren Beleuchtungssystemen her bekannt ist.

Die Kontaktierung der Drähte 6 erfolgt über mehrere an dem Drehabgriff 50 angeordnete Anschlußkontakte 53 und 54, welche in die entsprechenden Nuten 11 eingreifen und gegen die Drähte 6 zur Anlage kommen. Um eine variable und einfache Kontaktierung zu ermöglichen, ist beispielsweise der Anschlußkontakt 53 mittels einem Trägerelement 55 höhenverstellbar an dem Drehabgriff 50 angeordnet. Durch einfaches Verschieben des Trägerelementes 55 kann somit der an das Stromschienensystem angeschlossene Leuchte die gewünschte Funktion zugewiesen werden. Für die Erdung ist ferner ein in einem Schlitz 63 des Drehabgriffs 50 geführtes Drahtelement 62 vorgesehen, dessen Ende 62b den zur Erdung vorgesehenen linken unteren Draht 6 kontaktiert. Die Netzeinspeisung für das Stromschienensystem kann zum Beispiel durch einen entsprechend adaptierten Drehabgriff erfolgen, der in Längsrichtung an beliebiger Stelle positioniert wird. Der genauere Aufbau und die Funktionsweise des erfindungsgemäßen Kontaktierungselements 50 werden zu einem späteren Zeitpunkt noch ausführlicher erläutert. Zunächst soll jedoch anhand der Fig. 1 bis 9b der Aufbau des Stromschienensystems beschrieben werden.

Eine sichere Halterung der beiden Seitenflügel 10a, 10b des Drahthalterungselements 10 erfolgt durch mehrere Führungsarme 12₁ - 12₄, welche in entsprechende Führungsnuten 4₁ - 4₄ der U-förmigen Tragschiene 1 eingreifen. Die zu einem Stromleitprofil aneinandergereihten mehreren Drahthalterungselemente 10 werden bei der Montage in Längsrichtung in die Tragschiene 2 eingeschoben. An der Rückseite der Seitenflügel 10a und 10b, d.h. an der der Kontaktierungsseite gegenüberliegenden Seite der Nuten 11 befinden sich mehrere Stützstreben 16, welche für eine stabile Lagerung der Nuten 11 innerhalb der Tragschiene 2 sorgen, so daß diese beim Kontaktieren nicht zurückgedrängt werden. Auf diese Weise wird eine zuverlässige Kontaktierung der Drähte 6 unterstützt.

Die Verbindung der beiden Seitenflügel 10a und 10b erfolgt in regelmäßigen Abständen über Verbindungsstege 13, welche an dem Mittelschenkel 2 der Tragschiene 1 angeordnet sind. Die Verbindungsstege 13 weisen ferner nach unten abstehende Halteschenkel 15 auf, die gemeinsam mit einem von dem rechten Seitenflügel 10a horizontal abstehenden Horizontalschenkel 14 einen zusätzlichen Hohlraum 8 bilden. Dieser Hohlraum kann für die Lagerung zusätzlicher Kabel oder Leitungen verwendet werden. Darüber hinaus hat der Horizontalschenkel 14 noch die Aufgabe, zu verhindern, daß das Kontaktierungselement 50 seitenverkehrt in die Tragschiene 1 eingeführt wird, wie ebenfalls später noch erläutert wird.

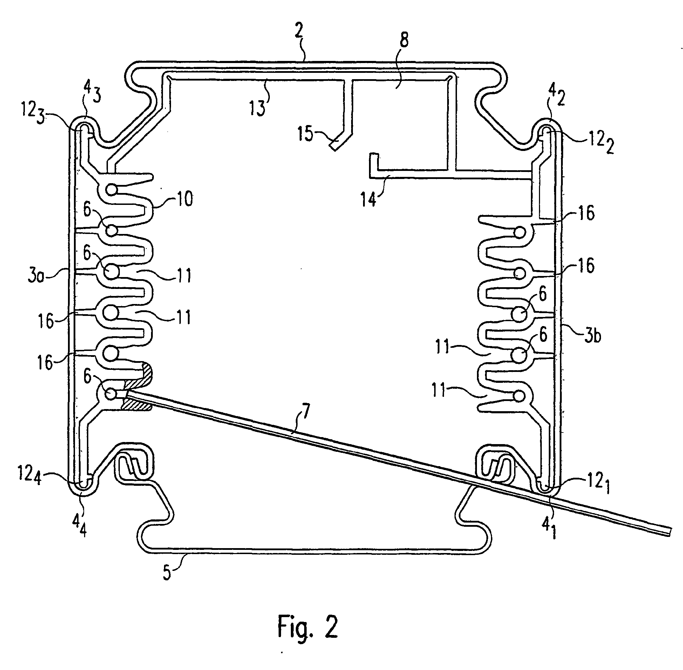

Die Form der Nuten 11 der Drahthalterungselemente 10 ist derart gewählt, daß ein Berührungsschutz gewährleistet ist, wie im folgenden anhand von Fig. 2 erläutert werden soll. Hier ist wiederum die Tragschiene 1 mit einem darin angeordneten Stromleitprofil dargestellt, allerdings nunmehr ohne den Drehabgriff 50. Die eingangs erwähnte Sicherheitsnorm sieht vor, daß die in dem Stromleitprofil angeordneten Drähte 6 nicht derart frei liegen dürfen, daß ein 1mm-dicker Prüfdraht 7 in Geradeaus-Dehnung auf einen stromführenden Draht 6 treffen kann. In der Darstellung ist dabei für den links unten angeordneten Draht 6 der Eintrittswinkel für den Prüfdraht 7 am günstigsten. Wie Fig. 2 zu entnehmen ist, sind die Breiten, Tiefen und Öffnungsformen der Nuten 11 derart bemessen, daß selbst bei dem kleinsten Eintrittswinkel der Prüfdraht 7 keinen der Drähte 6 kontaktieren kann. Auf diese Weise wird ein unbeabsichtigtes Berühren der Drähte 6 vermieden und die entsprechende Sicherheitsnorm erfüllt.

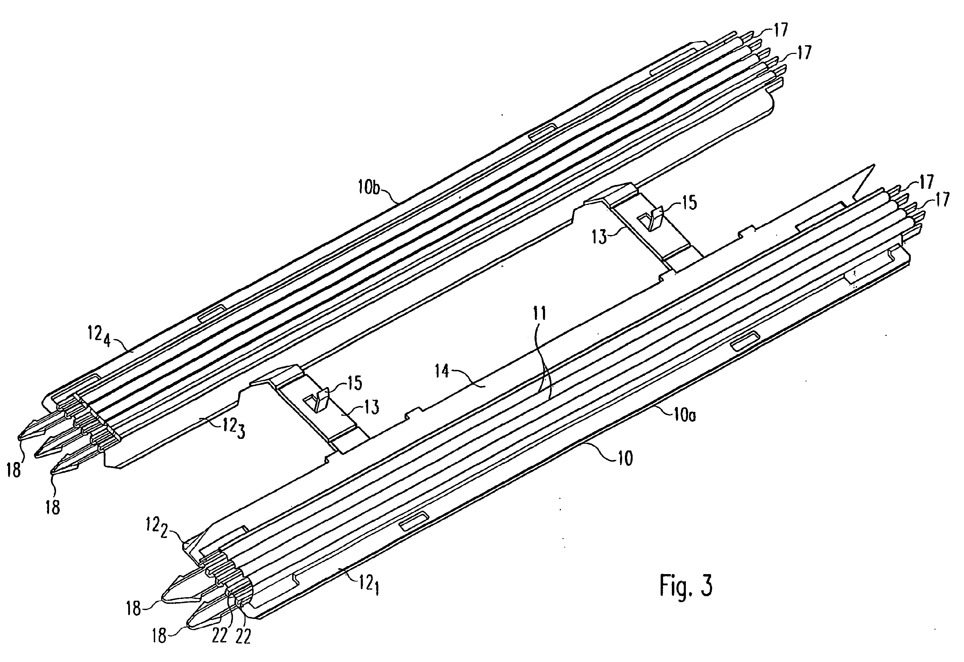

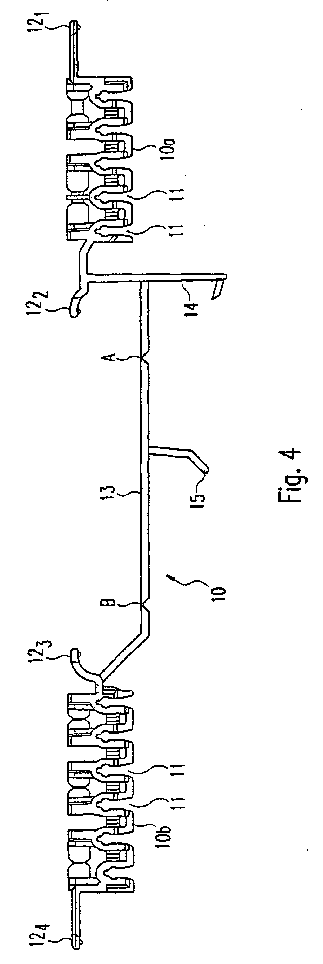

Anhand der Fig. 3 bis 6 soll nunmehr die konkrete Ausgestaltung der Drahthalterungselemente 10 erläutert werden, wobei Fig. 3 ein Drahthalterungselement 10 in perspektivischer Darstellung zeigt. Wesentliche Elemente des Drahthalterungselements 10 sind dabei die beiden Seitenflügel 10a und 10b, welche die Nuten 11 zur Lagerung der Drähte aufweisen. Sie sind über zwei Verbindungsstege 13 miteinander verbunden. Auf diese Weise kann zusätzlich mit Hilfe des Horizontalschenkels 14 und den von den Verbindungsstegen 13 abstehenden Halteschenkeln 15 der zuvor erwähnte Hohlraum 8 gebildet werden, der zur Lagerung weiterer für das Beleuchtungssystem nützlicher Leitungen oder Kabel benutzt werden kann. An den beiden Seitenflügeln 10a, 10b befinden sich ferner auch die Führungsarme 12₁ bis 12₄, welche in die Ausnehmungen 4₁ bis 4₄ der Tragschiene 1 beim Einsetzen eingreifen. Die Darstellungen in Fig. 3 und Fig. 4 zeigen dabei das Drahthalterungselement 10 unmittelbar nach der Herstellung. Um das Drahthalterungselement 10 in die Tragschiene 1 einzuführen, werden die Seitenflügel 10a und 10b um die beiden Faltstellen A und B um 90° nach unten geklappt (siehe Fig. 4) und anschließend in die Tragschiene 1 eingeschoben, wodurch sich die in den Fig. 1 und 2 dargestellte Anordnung ergibt.

An ihren Enden weisen die beiden Seitenflügel 10a und 10b Vorsprünge 17 bzw. 22 auf, mit deren Hilfe zwei zusammengefügte Drahthalterungselemente 10 überlappend ineinandergreifen. An einem der beiden Enden sind ferner Verriegelungsköpfe 18 vorgesehen, welche ein Entfernen zweier zusammengefügter Drahthalterungselemente 10 in Längsrichtung nur bis zu einer gewissen Maximalentfernung zulassen, so daß ein aus mehreren Drahthalterungselementen 10 zusammengesetztes Stromleitprofil in seiner Länge flexibel ist und damit Längenveränderungen der einzelnen aus Kunststoff bestehenden Drahthalterungselemente 10 aufgrund von Temperatunterschieden kompensiert werden können.

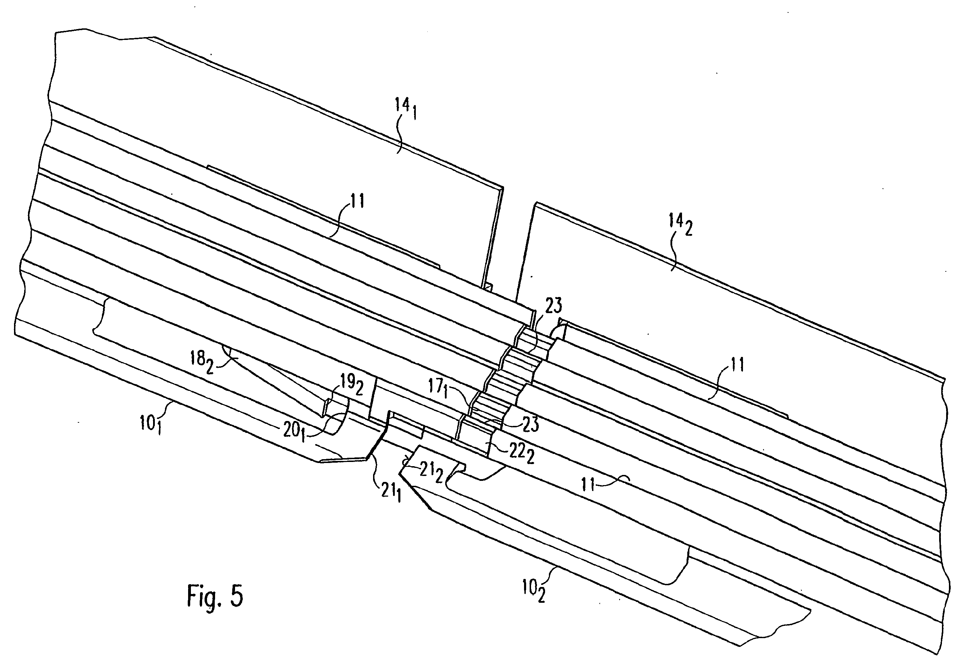

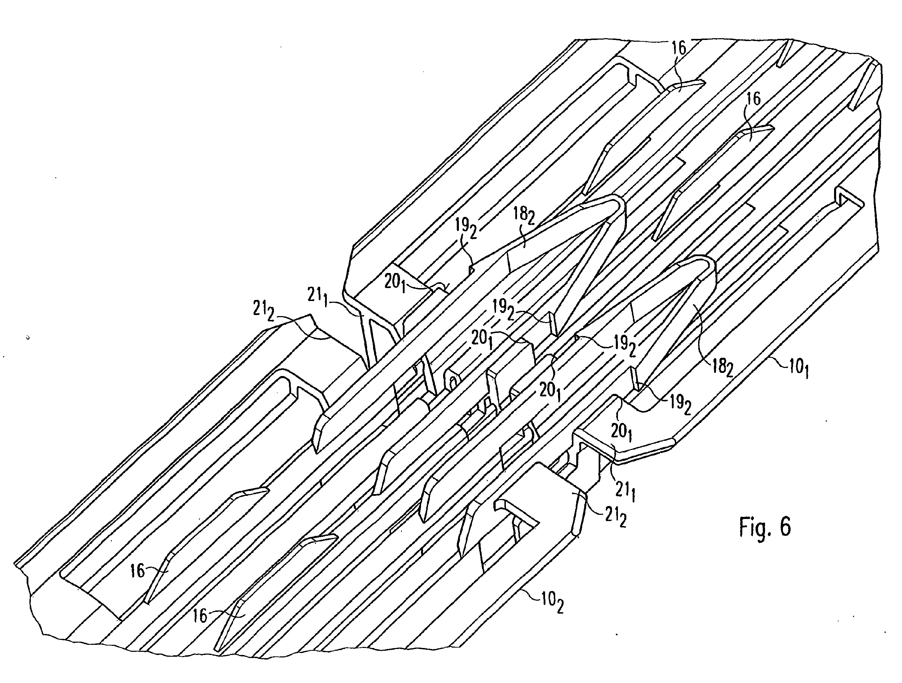

Dies soll anhand der Fig. 5 und 6 verdeutlicht werden, welche zwei zusammengesetzte Drahthalterungselemente in vergrößerter Darstellung zeigen, zum einen von der Kontaktierungsseite her (Fig. 5) und zum anderen von der gegenüberliegenden Rückseite (Fig. 6) her. Die zu dem ersten Drahthalterungselement 10₁ gehörenden Teile sind dabei mit dem Index 1 versehen, während die zu dem zweiten Drahthalterungselement 10₂ gehörenden Elemente den Index 2 aufweisen. Nach dem Zusammenfügen der beiden Drahthalterungselemente 10₁ und 10₂ greifen diese beiden derart überlappend ineinander, daß jeweils durch einen Vorsprung 17₁ des ersten Drahthalterungselements 10₁ sowie durch einen Vorsprung 22₂ des zweiten Drahthalterungselements 10₂ ein Kanal 23 gebildet wird, der die Nuten 11 der beiden Drahthalterungselemente 10₁ und 10₂ miteinander verbindet. Wie auch die Nuten 11 sind sämtliche auf diese Weise gebildeten Kanäle 23 in dem Verbindungsbereich lediglich von der Kontaktierungsseite, also von oben her zugänglich, nicht allerdings von der Seite. Dadurch wird auch in dem Bereich der Kanäle 23 der geforderte Berührungsschutz gewährleistet.

Der Darstellung in Fig. 6 ist zu entnehmen, daß die beiden Verriegelungsköpfe 18₂ ein Entfernen der beiden Drahthalterungselemente 10₁ und 10₂ nur bis zu einer Maximalentfernung zulassen, die dadurch vorgegeben ist, daß die an den Enden der Verriegelungsköpfe 18 seitlich vorstehenden Verriegelungsvorsprünge 19₂ gegen Stoppwände 20₁ zur Anlage kommen. Dabei ist diese vorgegebene maximale Entfernung sowie die Länge der ineinandergreifenden Vorsprünge 17 und 22 derart bemessen, daß selbst bei der Maximalentfernung der beiden Drahthalterungselemente 10₁ und 10₂ voneinander noch die zuvor erläuterten Kanäle 23 gebildet werden und der Berührungsschutz gewährleistet ist. Auf der anderen Seite können sich die Enden der beiden Drahthalterungselemente 10₁, 10₂ soweit aneinander annähern, bis ihre beiden Stirnseiten 21₁ und 21₂ gegeneinander in Anlage kommen. Dies bedeutet, daß beide Drahthalterungselemente 10₁, 10₂ mit einem gewissen Spiel gegeneinander verschiebbar sind, wobei jedoch zu jedem Zeitpunkt der Berührungsschutz erzielt wird. Auf diese Weise können Veränderungen der Länge eines einzelnen Drahthalterungselements 10, welches sich beispielsweise aufgrund von erhöhter Temperatur ausdehnt oder bei niedrigeren Temperaturen zusammenzieht, kompensiert werden. Dies ist insbesondere deswegen wichtig, da im Gegensatz zu den aus Kunststoff bestehenden Drahthalterungselementen 10 die darin gelagerten Drähte 6 selbst keine derartig großen Längenveränderungen vollführen können, da der Temperaturkoeffizient von Metall nur 1/10 des Ausdehnungskoeffizients von Kunststoff beträgt. Bei einer Länge von ca. 500mm für ein einzelnes Drahthalterungselement 10 kann somit ein zulässige Spiel, mit dem sich die aneinandergrenzenden Drahthalterungselemente 10 gegeneinander verschieben können, ca. 8mm betragen.

Die dargestellten Drahthalterungselemente 10 können aus Kunststoff in einfacher Weise im Spritzgußverfahren erzeugt werden, wodurch sie sehr kostengünstig herzustellen sind. Ferner ist es ausreichend, Drahthalterungselemente 10 in lediglich einer einzigen Länge herzustellen, da zur Anpassung des gebildeten Stromleitprofils an die unterschiedlichen Längen der Drahtschienen lediglich die Anzahl der verwendeten Drahthalterungselemente 10 angepaßt werden muß, was wiederum den Herstellungsaufwand des gesamten Systems deutlich reduziert. Die ineinandergreifenden Vorsprünge sowie die Verriegelungselemente können dabei auch anders ausgestaltet sein.

Bei Verwendung der soeben vorgestellten Drahthalterungselemente wäre es denkbar, zunächst sämtliche Tragschienen eines Stromschienensystems zu montieren und diese erst anschließend mit den erforderlichen Stromleitprofilen zu bestücken, wobei dann eine Kontaktierung über die gesamte Länge des Stromschienensystems hin möglich ist. Üblicherweise werden jedoch bereits die fertig bestückten Tragschienen vertrieben, in denen sich bereits ein vollständiges Stromleitprofil mit den darin angeordneten Drähten befindet. Im folgenden soll daher eine Möglichkeit erläutert werden, auch in den Verbindungsbereichen zwischen zwei Tragschienen eine durchgängige Kontaktierung zu realisieren. Diese durchgängige Kontaktierung wird dadurch erreicht, daß hierfür ein Verbindungselement verwendet wird, welches den Nuten der Stromleitprofile entsprechende und zusätzlich von den beiden Stirnseiten des Verbindungselements her zugängliche rillenförmige Ausnehmungen aufweist.

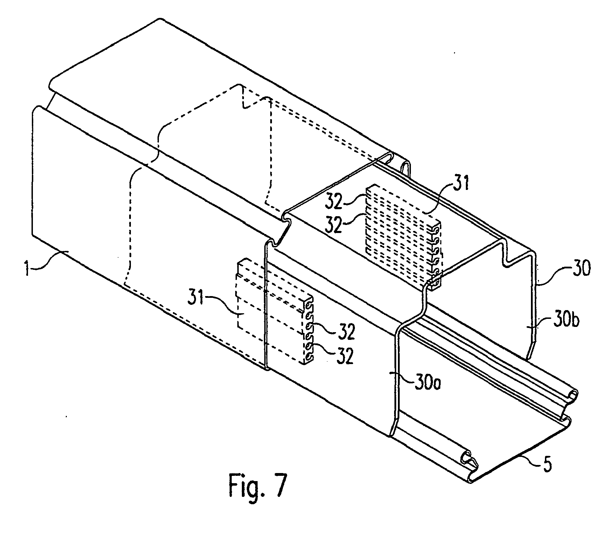

Dies ist zunächst schematisch in Fig. 7 dargestellt. Zur mechanischen Verbindung zweier aneinandergrenzender Tragschienen 1 wird eine ebenfalls U-förmige kurze Verbindungsschiene 30 verwendet, auf welche von beiden Seiten her die miteinander zu verbindenden Tragschienen 1 aufgeschoben werden. Eine nicht dargestellte Weiterbildung gewährleistet, daß zwei durch eine Verbindungsschiene 30 miteinander verbundene Tragschienen 1 lösbar zusammengehalten werden. Hierzu kann jede Tragschiene 1 in ihrem oberen Bereich eine oder mehrere Öffnungen aufweisen. Die Verbindungsschiene 30 ist dann ebenfalls mit entsprechenden Öffnungen versehen, durch die Federzungen ragen. Die Federzungen hintergreifen die Öffnungen der Tragschiene 1, sobald die Verbindungsschiene 30 in der Tragschiene 1 die entsprechende Position erreicht hat. Um die Tragschiene 1 und die Verbindungsschiene 30 wieder lösen zu können, muß lediglich Druck auf die Federzungen ausgeübt werden. Eine solche lösbare Verbindung liegt vorzugsweise an beiden Seiten vor, was bedeutet, daß die Verbindungsschiene 30 nächst ihren beiden Enden derartige Öffnungen mit den entsprechenden Federzungen aufweist. Alternativ zu einer beidseitig lösbaren Verbindung ist allerdings auch eine Ausgestaltung möglich, die lediglich auf einer Seite die soeben beschriebene Verbindung mittels Federzungen aufweist, während an der anderen Seite der Verbindungsschiene 30 eine übliche Schraubverbindung vorgesehen ist.

Eine besonders vorteilhafte Variante dieser Weiterbildung liegt darin, daß die an jeweils einem Ende der Verbindungsschiene 30 angeordneten Federzungen zu einem gemeinsamen Schienen-Verriegelungselement gehören, das an dem Mittelschenkel der Verbindungsschiene 30 angeordnet ist, wobei die Federzungen im oberen Bereich der Seitenwände seitlich durch Öffnungen ragen. Dabei ist das Schienen-Verriegelungselement so ausgebildet, daß die Federzungen unter Einwirkung einer Kraft von oben auf das Element in das Innere des Verbindungsschiene 30 eingezogen werden. Über eine in dem Mittelschenkel der Tragschienen 1 vorgesehene zusätzliche Öffnung ist das Schienen-Verriegelungselement von oben auf einfache Weise zu erreichen und beispielsweise mittels eines Schraubenziehers zu betätigen, so daß die Verbindung durch einen einfachen Handgriff wieder lösbar.

Die in Fig. 7 aus Gründen der Übersichtlichkeit nicht dargestellten Drahthalterungselemente 10 sind in dem Verbindungsbereich geringfügig anders ausgestaltet, um der zusätzlich in der Tragschiene 1 angeordneten Verbindungsschiene 30 Rechnung zu tragen. Beispielsweise weisen die Drahthalterungselemente 10 in diesem Bereich keine Stützstreben 16 auf. Zur Verbindung der Stromleitprofile sind an den Seitenschenkeln 30a und 30b der Verbindungsschiene 30 zwei Verbindungselemente 31 vorgesehen, welche die zuvor erwähnten Ausnehmungen 32 aufweisen. Innerhalb dieser Ausnehmungen 32 sind Metallverbinder angeordnet, die von beiden Seiten her mit den miteinander zu verbindenden Drähten verbunden werden. Dabei ist die Öffnungsform der Ausnehmungen 32 derart gewählt, daß auch diese das Sicherheitskriterium eines Berührungsschutzes erfüllen. Für eine Verbindung mit den Verbindungselementen 31 sind die den Verbindungselementen 31 benachbarten Drahthalterungselemente auch an ihren Enden modifiziert.

Im dargestellten Beispiel sind an beiden Seiten der Verbindungsschiene 30 identische Verbindungselemente 31 mit jeweils sechs Ausnehmungen 32 angeordnet. Dies bedeutet, daß die oberste Ausnehmung 32 des auf der rechten Seite angeordneten Verbindungselements 32 frei bleibt, da der entsprechende Seitenflügel 10a lediglich fünf Nuten 11 zur Halterung von fünf Drähten 6 aufweist. Selbstverständlich können jedoch auch der genauen Struktur der Drahthalterungselemente entsprechende Verbindungselemente verwendet werden.

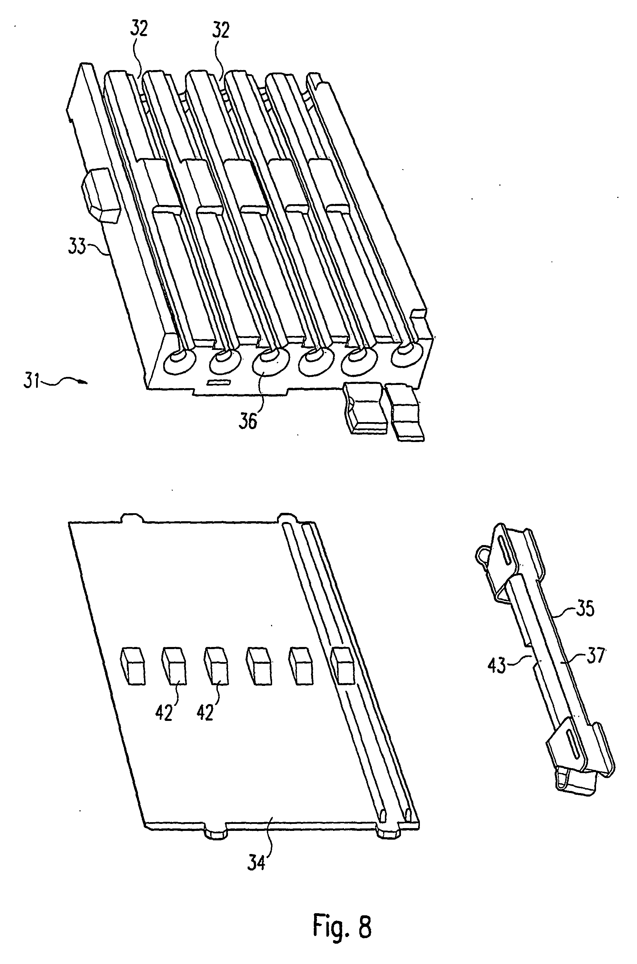

Die genauere Form eines Verbindungselements 31 ist in Fig. 8 dargestellt. Es besteht aus einem kastenförmigen und an der Unterseite offenen Basisteil 33, in das von der Unterseite her Metallverbinder 35 eingesetzt werden. Die Ausnehmungen 32 des Basisteils 33 sind von den beiden Stirnseiten her über trichterförmige Öffnungen 36 zugänglich, wobei beim Einführen eines Drahtes in eine trichterförmige Öffnung 36 dieser in Verbindung mit dem Metallverbinder 35 gebracht wird. Nach dem Einsetzen der Metallverbinder 35 wird das Basisteil 33 durch eine Abdeckplatte 34 von der Unterseite her verschlossen. Eine Kontaktierung durch ein Leuchten-Modul in dem Bereich des Verbindungselements 31 erfolgt dann dadurch, daß die Anschlußkontakte des Kontaktierungselements gegen die Oberseite einer Kontaktierungsplatte 37 der Metallverbinder 35 gepreßt werden. Am Ende der Metallverbinder 35 wird diese Aufgabe wieder durch die Drähte übernommen, so daß keine Lücke entsteht, in der eine Kontaktierung nicht möglich ist.

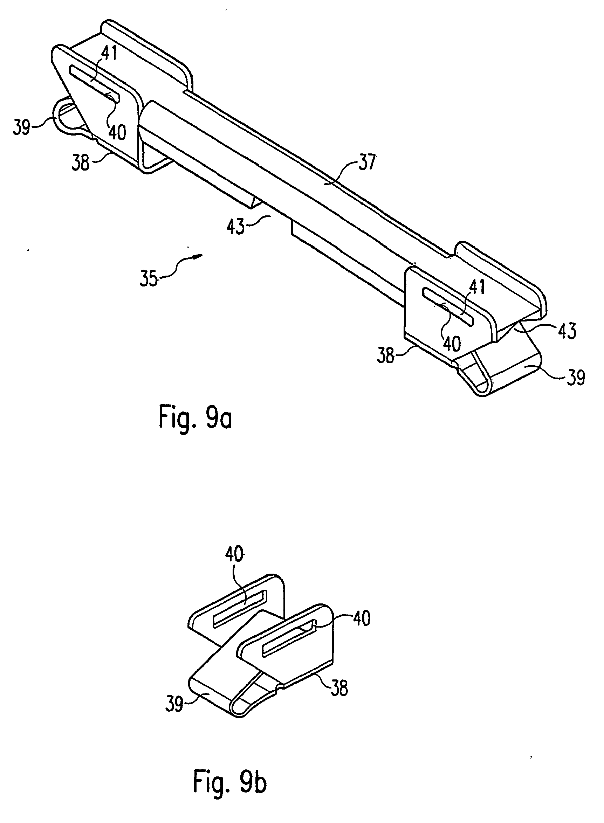

Die nähere Ausgestaltung eines Metallverbinders 35 ist in den Fig. 9a und 9b gezeigt. Er besteht aus einer länglichen und an ihren Längsseiten ein wenig nach unten gebogenen Kontaktierungsplatte 37, deren Aufgabe es ist, den elektrischen Strom von den Drähten zu übernehmen und weiterzuleiten. An den Enden der Kontaktierungsplatte 37 ist jeweils ein vorzugsweise aus einer Chrom-Nickel-Legierung bestehendes U-förmiges Federelement 38, welches einzeln in Fig. 9b dargestellt ist, angeordnet. Das Federelement 38 weist eine nach innen gebogene Federzunge 39 auf, durch welche ein in den Metallverbinder 35 eingeführter Draht verklemmt und ausreichend fest in Hinblick auf die elektrischen Übergangswiderstände gegen die Kontaktierungsplatte 37 gedrückt wird. Auf diese Weise wird ferner vermieden, daß sich die Drähte bei einer sich verändernden Wärmeausdehnung des Stromleitprofils pumpenartig verschieben bzw. auswandern können. Die von den Drähten abgewandte Seite der aus verzinntem Kupfer bestehenden Kontaktierungsplatte 37 bildet die Kontaktierungsfläche für die Kontakte des Kontaktierungselements. Zur Verbesserung des Kontakts zwischen der Kontaktierungsplatte 37 und den Drähten besitzt die Kontaktierungsplatte 37 an ihrer Unterseite eine leicht bogenförmige oder dreieckige Vertiefung 43.

Die Befestigung der Federelemente 38 an den Enden der Kontaktierungsplatte 37 erfolgt durch an den Seitenwänden der Federelemente 38 befindliche Ausnehmungen 40, in die Vorsprünge 41 der Kontaktierungsplatte 37 eingreifen. Eine stabile Anordnung der Metallverbinder 35 in dem Verbindungselement 31 wird ferner dadurch unterstützt, daß an der Abdeckplatte 34 aus Kunststoff bestehende Zapfen 42 angeordnet sind, welche nach dem Aufsetzen der Abdeckplatte 34 von der Unterseite her gegen die Kontaktierungsplatten 37 der Metallverbinder 35 drücken. Da die Zapfen 42 ferner in seitliche Ausnehmungen 43 der nach unten gebogenen Längsseiten der Kontaktierungsplatten 37 eingreifen, wird gleichzeitig auch ein seitliches Verschieben der Metallverbinder 35 unterbunden. Darüber hinaus stellen die Zapfen 42 auch eine Sperre dar, durch die das Auswandern der Drähte begrenzt wird. Das hier dargestellte Verbindungselement schließt die Lücke zwischen den Drahthalterungselementen der Stromleitprofile, so daß ermöglicht wird, bereits fertig bestückte Stromschienen 1, mit durchgängig kontaktierbaren Stromleitprofilen zusammenzufügen, wobei auch in den Verbindungsbereichen kontaktiert werden kann.

Dabei ist die Anwendung dieses Verbindungselements nicht auf das dargestellte Beispiel mit dem erfindungsgemäßen Drahthalterungselementen beschränkt. Beispielsweise kann das in den Fig. 7 bis 9b dargestellte Verbindungselement auch bei dem eingangs erwähnten Lichtbandsystem, bei dem die Stromleitprofile im Extrusionsverfahren hergestellt werden und einstückig sind, für deren Verbindung Verwendung finden.

Alternativ zu der zuvor erwähnten Verwendung eines adaptierten Drehabgriffs für die Netzeinspeisung kann auch ein an die Stirnseite einer Tragschiene anschließbares und mit den Metallverbindern zusammenwirkendes Netz-Anschlußelement vorgesehen sein, durch welches die Drähte des Stromschienensystems mit den Netzleitungen verbunden werden.

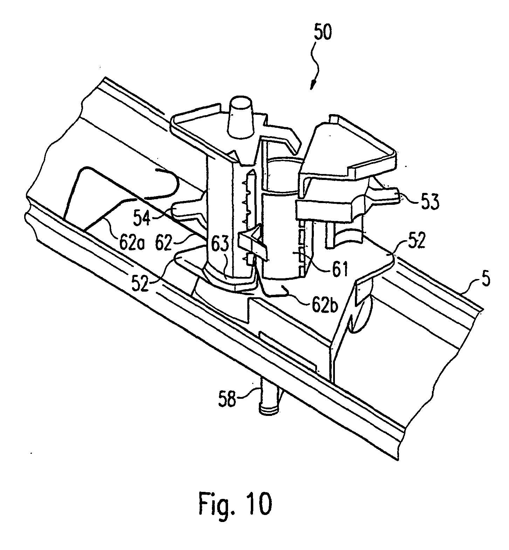

Abschließend soll anhand der Fig. 1 und 10 der genauere Aufbau und die Funktionsweise des als Drehabgriff 50 ausgestalteten Kontaktierungselements erläutert werden. Fig. 10 zeigt dabei den Drehabgriff 50 mit einer an seiner Unterseite angeordneten Abdeckschiene 5 in perspektivischer Darstellung. Wesentlicher Bestandteil des Drehabgriffs 50 sind die an der Außenseite des zylinderförmigen Basiskörpers 61 angeordneten Kontakte 53 und 54, die zu einer wahlweisen Kontaktierung der verschiedenen Drähte 6 höhenverstellbar sind. Eine weitere, allerdings nicht frei wählbare sondern vorgegebene Kontaktierung zur Erdung ist durch das Drahtelement 62 gegeben. Dieses Drahtelement 62 ist in einem an dem Basiskörper 61 vorgesehenen Schlitz 63 geführt, wobei ein Ende 62a des Drahtelements 62 durch seine Formgebung in der Abdeckschiene 5 des Leuchten-Moduls klemmend fixiert ist. Das andere Ende 62b steht in der Höhe des Erdungsdrahtes seitlich hervor. Ferner besitzt der Drehabgriff 50 in seinem unteren Bereich zwei seitlich abstehende Verriegelungselemente 52.

Das Kontaktieren der Drähte 6 des Stromleitprofils erfolgt dadurch, daß der mit einem Beleuchtungsmodul verbundene Drehabgriff 50 in die untere Öffnung der Tragschienen 1 eingeführt wird. Wie Fig. 1 zu entnehmen ist, ist der zylinderförmigen Basiskörper 61 unterschiedlich hoch, wobei der lediglich auf der rechten Seite der Tragschiene 1 angeordnete Horizontalschenkel 14 verhindert, daß das Kontaktierungselement 50 seitenverkehrt in die Tragschiene 1 eingeführt wird.

Nach dem Einführen des Drehabgriffes 50 wird dieser um ca. 45° verdreht, wobei infolgedessen die seitlich angeordneten Verriegelungselemente 52 in nach innen vorstehende Teile der Tragschiene 1 bzw. des Stromleitprofils eingreifen und somit für eine mechanische Befestigung des Leuchten-Moduls sorgen. Gleichzeitig werden die Anschlußkontakte 53 und 54 in die Nuten 11 der Drahthalterungselemente 10 hineingedreht, so daß der erwünschte elektrische Kontakt zustande kommt. Wie zuvor erwähnt, können einige oder alle Kontakte höhenverstellbar sein, was im dargestellten Beispiel dadurch erfolgt, daß das Trägerelement 55 des Kontakts 53 innerhalb von Führungsschienen 56 und 57 vertikal verschiebbar ist. Dabei sind das Trägerelement 55 sowie der zylinderförmige Basiskörper 61 mit den Führungsschienen 56 und 57 so ausgestaltet, daß das Trägerelement 55 in den den Drähten 6 entsprechenden Positionen leicht einrasten kann, wodurch eine genaue Positionierung des Kontakts 53 erleichtert wird.

Der Schlitz 63 bildet für das Drahtelement 62 einen exenterförmigen Anschlag und bewirkt, daß das Ende 62b des Drahtelements 62 während dem Verdrehen des Drehabgriffs 50 auf den zur Erdung vorgesehenen linken unteren Draht 6 gepreßt wird. Auf diese Weise wird eine Erdung zwischen der metallischen Abdeckschiene 5, die Bestandteil des Leuchten-Moduls ist, und der metallischen Tragschiene 1 hergestellt. Hierfür ist es notwendig, daß das Drahtelement 62 eine gewisse Festigkeit aufweist, weshalb es vorzugsweise aus einem verzinkten Stahldraht oder einem CrNi-Draht besteht.

Die an der Unterseite des Drehabgriffs angeordnete Abdeckschiene 5 verschließt die Tragschiene 1 nach unten, wodurch gleichzeitig auch das Eindringen von Staub vermieden wird. Im Bereich des Kontaktierungselements 50 weist die Abdeckschiene 5 einen länglichen Schlitz auf, in welchen der Drehknebel 58 in der Verriegelungsstellung nach oben eingeführt werden kann, so daß er unten mit der Abdeckschiene 5 bündig ist. Auf diese Weise wird eine vollständige Abschließung der Tragschiene 1 erzielt.

Die Abdeckschiene 5 wird auch an Stellen verwendet, an denen keine Leuchten-Module angeordnet sind. Im Falle der Befestigung eines Leuchten-Moduls ist die Abdeckschiene 5 allerdings gleichzeitig auch die Halterung für sämtliche Elemente des Leuchten-Moduls, wobei z.B. das bzw. die Vorschaltgeräte oben auf der Abdeckschiene 5 angeordnet sind und somit in den Innenraum der U-förmigen Tragschiene hineinragen. Der vorgestellte Drehabgriff 50 ermöglicht auf eine einfache Weise eine Kontaktierung der Drähte sowie eine mechanische Befestigung des Leuchten-Moduls in dem Stromschienensystem. Insbesondere bei der vorgestellten Lösung, bei der über die gesamte Länge des Stromschienensystems hinweg eine freie Kontaktierung ermöglicht wird, ist eine Anwendung des dargestellten Drehabgriffes 50 vorteilhaft, da dieser besonders flexibel einsetzbar ist und wieder entfernt werden kann.

Die vorliegende Erfindung gibt somit ein sehr leistungsfähiges Stromschienensystem an, welches erstmalig die Möglichkeit einer vollkommen freien Kontaktierung und Anordnung der Leuchten-Module bietet. Dies hat zur Folge, daß auch die einzelnen Leuchten-Module nicht mehr an bestimmte Längen angepaßt werden müssen, um eine geeignete Anordnung innerhalb des Stromschienensystems zu ermöglichen. Durch den erfindungsgemäßen Drehabgriff kann ein schnelles und flexibles Kontaktieren der relativ schwer zugänglichen Drähte innerhalb einer U-förmigen Tragschiene erreicht werden.

## Patentansprüche

1. Stromschienensystem für Leuchten mit
mehreren modular miteinander verbindbaren U-förmigen Tragschienen (1) sowie einem an mindestens einer der beiden Innenseiten der Seitenwände (3a, 3b) der Tragschienen (1) angeordneten Stromleitprofil, das von einer Kontaktierungsseite her zugängliche und aneinander angrenzend angeordnete Nuten (11) zur Aufnahme von Drähten (6) für die Stromversorgung und/oder Übertragung von digitalen Steuerbefehlen aufweist,
wobei
a) eine an das Stromschienensystem anzuschließende Leuchte ein Kontaktierungselement (50) aufweist, das in die Öffnung einer Tragschiene (1) einführbar und teilweise verdrehbar ist, um durch das Verdrehen Anschlusskontakte (53, 54) des Kontaktierungselements (50) in die Nuten (11) des Stromleitprofils zum Kontaktieren der Drähte (6) einzuführen,
b) mindestens einer der Anschlusskontakte (53) für eine wahlweise Kontaktierung der Drähte (6) verstellbar ist und
c) das Kontaktierungselement (50) zur Erdung ein Drahtelement (62) aufweist, dessen eines Ende (62a) in Kontakt mit der Leuchte bzw. einem Leuchten-Modul ist und dessen anderes Ende (62b) nach dem Verdrehen einen zur Erdung vorgesehenen Draht (6) des Stromschienensystems kontaktiert,
**dadurch gekennzeichnet,**
**dass** das Drahtelement (62) in einem Schlitz (63) des Kontaktierungselements (50) geführt ist, der einen exenterförmigen Anschlag bildet und während dem Verdrehen des Kontaktierungselements (50) das andere Ende (62b) des Drahtelements (62) gegen den zur Erdung vorgesehenen Draht (6) presst.

2. Stromschienensystem nach Anspruch 1,
**dadurch gekennzeichnet,**
**dass** der mindestens eine verstellbare Anschlusskontakt (53) höhenverstellbar ist.

3. Stromschienensystem nach Anspruch 1 oder 2,
**dadurch gekennzeichnet,**
**dass** durch das Verdrehen an dem Kontaktierungselement (50) befindliche Verriegelungselemente (52) hervorstehende Teile der Tragschiene (1) hintergreifen.

4. Stromschienensystem nach einem der Ansprüche 1 bis 3,
**dadurch gekennzeichnet,**
**dass** der mindestens eine verstellbare Anschlusskontakt (53) in den Drähten (6) entsprechenden Positionen verrastbar ist.

5. Stromschienensystem nach einem der vorherigen Ansprüche,
**dadurch gekennzeichnet,**
**dass** das Kontaktierungselement (50) zum Kontaktieren der Drähte (6) um ca. 45° zu verdrehen ist.

6. Stromschienensystem nach einem der vorherigen Ansprüche,
**dadurch gekennzeichnet,**
**dass** an der Unterseite des Kontaktierungselements (50) eine Abdeckschiene (5) zum Verschließen der Tragschiene (1) angeordnet ist, wobei ein zum Verdrehen des Kontaktierungselements (50) vorgesehener Drehknebel (58) nach dem Kontaktieren der Drähte (6) in einer Öffnung der Abdeckschiene (5) versenkbar ist.

7. Stromschienensystem nach einem der vorherigen Ansprüche,
**dadurch gekennzeichnet,**
**dass** das von einer Tragschiene (1) gehaltene Stromleitprofil aus mindestens zwei aneinandergefügten Drahthalterungselementen (10, 10₁, 10₂) besteht, welche die Nuten (11) zur Aufnahme der Drähte (6) aufweisen,
wobei die Drahthalterungselemente (10, 10₁, 10₂) beim Aneinanderfügen mit an ihren Enden befindlichen Vorsprüngen (17, 22) derart überlappend ineinandergreifen, dass sie in dem Verbindungsbereich den Nuten (11) entsprechende und zu der Kontaktierungsseite hin offene Kanäle (23) bilden.

8. Stromschienensystem nach Anspruch 7,
**dadurch gekennzeichnet,**
**dass** die Drahthalterungselemente (10, 10₁, 10₂) Verriegelungselemente (18, 19) aufweisen, welche eine relative Längsbewegung zweier aneinandergefügter Drahthalterungselemente (10, 10₁, 10₂) gegeneinander auf ein vorbestimmtes Bewegungsspiel begrenzen.

9. Stromschienensystem nach Anspruch 7 oder 8,
**dadurch gekennzeichnet,**
**dass** die Drahthalterungselemente (10, 10₁, 10₂) jeweils aus zwei Seitenflügeln (10a, 10b) bestehen, welche an den Seitenwänden (3a, 3b) der Tragschiene (1) angeordnet sind und die Nuten (11) zur Aufnahme der Drähte (6) aufweisen,
wobei die beiden Seitenflügel (10a, 10b) jeweils durch Verbindungsstege (13) miteinander verbunden sind, welche an dem Mittelschenkel (2) der Tragschiene (1) angeordnet sind.

10. Stromschienensystem nach einem der vorherigen Ansprüche,
**dadurch gekennzeichnet,**
**dass** dieses zum Verbinden der beiden Stromleitprofile von zwei aufeinanderfolgenden Tragschienen (1) ein Verbindungselement (31) aufweist, welches den Nuten (11) der Stromleitprofile entsprechende rillenförmige Ausnehmungen (32) aufweist, in die jeweils ein Metallverbinder (35) eingesetzt ist, an den die in den Nuten (11) der Stromleitprofile anzuordnenden und miteinander zu verbindenden Drähte (6) von beiden Seiten her anschließbar sind.

11. Stromschienensystem nach Anspruch 10,
**dadurch gekennzeichnet,**
**dass** die Metallverbinder (35) aus einer länglichen Kontaktierungsplatte (37) bestehen, an deren Enden jeweils ein U-förmiges Federelement (38) zum Verklemmen der an den Metallverbinder (35) anzuschließenden Drähte (6) angeordnet ist.

12. Stromschienensystem nach Anspruch 10 oder 11,
**dadurch gekennzeichnet,**
**dass** dieses zum Verbinden zweier Tragschienen (1) eine U-förmige Verbindungsschiene (30) aufweist, welche in beide Tragschienen (1) innen eingreift und an deren Seitenschenkeln (30a, 30b) jeweils ein Verbindungselement (31) angeordnet ist.

13. Stromschienensystem nach einem der vorherigen Ansprüche,
**dadurch gekennzeichnet,**
**dass** der Innenraum der U-förmigen Tragschiene (1) als Aufnahmeraum für Betriebsgeräte der Lampen sowie für entsprechende Kontaktierungselemente dient.

14. Kontaktierungselement zum Anschließen einer Leuchte an ein Stromschienensystem, welches mehrere modular miteinander verbindbare U-förmigen Tragschienen (1) sowie ein an mindestens einer der beiden Innenseiten der Seitenwände (3a, 3b) der Tragschienen (1) angeordnetes Stromleitprofil aufweist, das von einer Kontaktierungsseite her zugängliche übereinander angeordnete Nuten (11) zur Aufnahme von Drähten (6) für die Stromversorgung und/oder Übertragung von digitalen Steuerbefehlen aufweist,
wobei
a) das Kontaktierungselement (50) in die Öffnung einer Tragschiene (1) einführbar und teilweise verdrehbar ist, um durch das Verdrehen Anschlusskontakte (53, 54) des Kontaktierungselements (50) in die Nuten (11) des Stromleitprofils zum Kontaktieren der Drähte (6) einzuführen,
b) mindestens einer der Anschlusskontakte (53) für eine wahlweise Kontaktierung der Drähte (6) verstellbar ist und
c) das Kontaktierungselement (50) zur Erdung ein Drahtelement (62) aufweist, dessen eines Ende (62a) in Kontakt mit der Leuchte bzw. einem Leuchten-Modul ist und dessen anderes Ende (62b) nach dem Verdrehen einen zur Erdung vorgesehenen Draht (6) des Stromschienensystems kontaktiert,
**dadurch gekennzeichnet,**
**dass** das Drahtelement (62) in einem Schlitz (63) des Kontaktierungselements (50) geführt ist, der einen exenterförmigen Anschlag bildet und während dem Verdrehen des Kontaktierungselements (50) das andere Ende (62b) des Drahtelements (62) gegen den zur Erdung vorgesehenen Draht (6) presst.

15. Kontaktierungselement nach Anspruch 14,
**dadurch gekennzeichnet,**
**dass** der mindestens eine verstellbare Anschlusskontakt (53) höhenverstellbar ist.

16. Kontaktierungselement nach Anspruch 14 oder 15,
**dadurch gekennzeichnet,**
**dass** dieses Verriegelungselemente (52) zum Hintergreifen von hervorstehenden Teilen der Tragschiene (1) nach dem Verdrehen aufweist.

17. Kontaktierungselement nach einem der Ansprüche 14 bis 16,
**dadurch gekennzeichnet,**
**dass** der mindestens eine verstellbare Anschlusskontakt (53) in den Drähten (6) entsprechenden Positionen verrastbar ist.

## Claims

1. A conductor rail system for luminaires having
a plurality of U-shaped mounting rails (1), which can be connected together in a modular fashion, and also an electroconductor profile that is arranged on at least one of the two insides of the side walls (3a, 3b) of the mounting rails (1) and has grooves (11) that are accessible from a contact side and are arranged adjacently to each other to receive wires (6) for the power supply and/or transmission of digital control commands,
wherein
a) a luminaire that is to be connected to the conductor rail system has a contact element (50) which can be introduced into the opening of a mounting rail (1) and is in part rotatable in order, by means of the rotation, to introduce connecting contacts (53, 54) of the contact element (50) into the grooves (11) of the electroconductor profile for the purpose of contacting the wires (6),
b) at least one of the connecting contacts (53) is adjustable for selective contacting of the wires (6), and
c) the contact element (50) for earthing purposes has a wire element (62), one end (62a) of which is in contact with the luminaire or a luminaire module respectively and the other end (62b) of which, after the rotation, contacts a wire (6) of the conductor rail system that is provided for the earthing,
**characterised in that**
the wire element (62) is guided in a slot (63) of the contact element (50) that forms an eccentric stop and during the rotation of the contact element (50) presses the other end (62b) of the wire element (62) against the wire (6) that is provided for the earthing.

2. A conductor rail system according to claim 1,
**characterised in that**
the at least one adjustable connecting contact (53) is vertically adjustable.

3. A conductor rail system according to claim 1 or 2,
**characterised in that**
as a result of the rotation locking elements (52) located on the contact element (50) grip behind protruding portions of the mounting rail (1).

4. A conductor rail system according to one of claims 1 to 3,
**characterised in that**
the at least one adjustable connecting contact (53) can be latched in positions corresponding to the wires (6).

5. A conductor rail system according to one of the previous claims,
**characterised in that**
the contact element (50) is to be rotated by approximately 45° for the purpose of contacting the wires (6).

6. A conductor rail system according to one of the previous claims,
**characterised in that**
arranged on the underside of the contact element (50) there is a covering rail (5) for closing the mounting rail (1), wherein a rotary toggle (58) that is provided to rotate the contact element (50) can be sunk in an opening of the covering rail (5) after the wires (6) have been contacted.

7. A conductor rail system according to one of the previous claims,
**characterised in that**
the electroconductor profile held by a mounting rail (1) consists of at least two wire-holding elements (10, 10₁, 10₂) which are joined together and have the grooves (11) to receive the wires (6),
wherein the wire-holding elements (10, 10₁, 10₂) when joined together with projections (17, 22) located at their ends engage with each other in an overlapping manner in such a way that in the connection area they form channels (23) that correspond to the grooves (11) and are open towards the contact side.

8. A conductor rail system according to claim 7,
**characterised in that**
the wire-holding elements (10, 10₁, 10₂) have locking elements (18, 19) that limit a relative longitudinal movement of two wire-holding elements (10, 10₁, 10₂), which are joined together, with respect to each other, to a predetermined clearance movement.

9. A conductor rail system according to claim 7 or 8,
**characterised in that**
the wire-holding elements (10, 10₁, 10₂) consist in each case of two side wings (10a, 10b) which are arranged on the side walls (3a, 3b) of the mounting rail (1) and have the grooves (11) to receive the wires (6),
wherein the two side wings (10a, 10b) are in each case connected together by connection webs (13) which are arranged on the central leg (2) of the mounting rail (1).

10. A conductor rail system according to one of the previous claims,
**characterised in that**
in order to connect the two electroconductor profiles of two successive mounting rails (1) the system has a connection element (31) which has furrow-shaped recesses (32) which correspond to the grooves (11) of the electroconductor profiles and into which there is inserted a respective metal connector (35) to which the wires (6) that are to be arranged in the grooves (11) of the electroconductor profiles and are to be connected together can be connected from both sides.

11. A conductor rail system according to claim 10,
**characterised in that**
the metal connectors (35) consist of an elongated contact plate (37) arranged at the ends of which there is a respective U-shaped spring element (38) for clamping the wires (6) that are to be connected to the metal connector (35).

12. A conductor rail system according to claim 10 or 11,
**characterised in that**
in order to connect two mounting rails (1) the system has a U-shaped connection rail (30) which engages inwardly into both mounting rails (1) and arranged at the side legs (30a, 30b) of which there is a respective connection element (31).

13. A conductor rail system according to one of the previous claims,
**characterised in that**
the interior space of the U-shaped mounting rail (1) is used as a receiving space for operating equipment of the lamps and also for corresponding contact elements.

14. A contact element for connecting a luminaire to a conductor rail system which has a plurality of U-shaped mounting rails (1), which can be connected together in a modular fashion, and also an electroconductor profile that is arranged on at least one of the two insides of the side walls (3a, 3b) of the mounting rails (1) and has grooves (11) that are accessible from a contact side and are arranged one on top of the other to receive wires (6) for the power supply and/or transmission of digital control commands,
wherein
a) the contact element (50) can be introduced into the opening of a mounting rail (1) and is in part rotatable in order, by means of the rotation, to introduce connecting contacts (53, 54) of the contact element (50) into the grooves (11) of the electroconductor profile for the purpose of contacting the wires (6),
b) at least one of the connecting contacts (53) is adjustable for selective contacting of the wires (6), and
c) the contact element (50) for earthing purposes has a wire element (62), one end (62a) of which is in contact with the luminaire or a luminaire module respectively and the other end (62b) of which, after the rotation, contacts a wire (6) of the conductor rail system that is provided for the earthing,
**characterised in that**
the wire element (62) is guided in a slot (63) of the contact element (50) that forms an eccentric stop and during the rotation of the contact element (50) presses the other end (62b) of the wire element (62) against the wire (6) that is provided for the earthing.

15. A contact element according to claim 14,
**characterised in that**
the at least one adjustable connecting contact (53) is vertically adjustable.

16. A contact element according to claim 14 or 15,
**characterised in that**
the element has locking elements (52) to grip behind protruding portions of the mounting rail (1) after the rotation.

17. A contact element according to one of claims 14 to 16,
**characterised in that**
the at least one adjustable connecting contact (53) can be latched in positions corresponding to the wires (6).

## Revendications

1. Système de barre omnibus pour luminaires avec plusieurs rails de support en forme de U (1) pouvant être reliés les uns aux autres de manière modulaire ainsi qu'un profil électroconducteur disposé sur au moins l'un des deux côtés intérieurs des parois latérales (3a, 3b) des rails de support (1), lequel présente des rainures (11) accessibles depuis un côté d'établissement du contact et disposées de manière adjacente les unes aux autres pour la réception de fils (6) pour l'alimentation en courant et/ou la transmission d'instructions de commande numériques,
a) un luminaire à raccorder au système de barre omnibus présentant un élément de contact (50) lequel peut être inséré dans l'ouverture d'un rail de support (1) et peut être soumis à une torsion partielle afin de, grâce à la torsion, introduire des contacts de connexion (53, 54) de l'élément de contact (50) dans les rainures (11) du profil électroconducteur pour l'établissement du contact des fils (6),
b) au moins l'un des contacts de connexion (53) pouvant être réglé pour un établissement du contact au choix des fils (6), et
c) l'élément de contact (50) présentant un élément de fil (62) pour la mise à la terre, dont l'une des extrémités (62a) est en contact avec le luminaire et/ou un module de luminaire et dont l'autre extrémité (62b) entre en contact, après la torsion, avec un fil (6) prévu pour la mise à la terre du système de barre omnibus,
**caractérisé en ce que**
l'élément de fil (62) est guidé dans une fente (63) de l'élément de contact (50) laquelle forme une butée de forme excentrique, et **en ce que** lors de la torsion de l'élément de contact (50), l'autre extrémité (62b) de l'élément de fil (62) est pressée contre le fil (6) prévu pour la mise à la terre.

2. Système de barre omnibus selon la revendication 1,
**caractérisé en ce que**
cet au moins un contact de connexion réglable (53) peut être réglé en hauteur.

3. Système de barre omnibus selon la revendication 1 ou 2,
**caractérisé en ce que**
grâce à la torsion, des éléments de verrouillage (52) se trouvant sur l'élément de contact (50) agrippent par l'arrière des parties en saillie du rail de support (1).

4. Système de barre omnibus selon l'une des revendications 1 à 3,
**caractérisé en ce que**
cet au moins un contact de connexion réglable (53) peut se mettre en prise dans des positions correspondant aux fils (6).

5. Système de barre omnibus selon l'une des revendications précédentes,
**caractérisé en ce que**
l'élément de contact (50) pour la mise en contact des fils (6) doit être soumis à une torsion d'environ 45°.

6. Système de barre omnibus selon l'une des revendications précédentes,
**caractérisé en ce que**
sur le dessous de l'élément de contact (50), un rail de recouvrement (5) pour fermer le rail de support (1) est disposé, une manette de torsion (58) prévue pour la torsion de l'élément de contact (50) pouvant être enfoncée après la mise en contact des fils (6) dans une ouverture du rail de recouvrement (5).

7. Système de barre omnibus selon l'une des revendications précédentes,
**caractérisé en ce que**
le profil électroconducteur maintenu par un rail de support (1) se compose d'au moins deux éléments de fixation des fils (10, 10₁, 10₂) assemblés, lesquels présentent les rainures (11) pour la réception des fils (6),
les éléments de fixation des fils (10, 10₁, 10₂), lorsqu'ils sont assemblés, se mettant en prise les uns avec les autres avec des saillies (17, 22) se trouvant à leurs extrémités de manière à former, dans la zone de jonction, des canaux (23) correspondants aux rainures (11) et ouverts du côté d'établissement du contact.

8. Système de barre omnibus selon la revendication 7,
**caractérisé en ce que**
les éléments de fixation des fils (10, 10₁, 10₂) présentent des éléments de verrouillage (18, 19), lesquels limitent un mouvement longitudinal relatif de deux éléments de fixation des fils (10, 10₁, 10₂) assemblés l'un par rapport à l'autre à une liberté de mouvement prédéterminée.

9. Système de barre omnibus selon les revendications 7 ou 8,
**caractérisé en ce que**
les éléments de fixation des fils (10, 10₁, 10₂) se composent respectivement de deux ailes latérales (10a, 10b), lesquelles sont disposées sur les parois latérales (3a, 3b) du rail de support (1) et présentent les rainures (11) pour la réception des fils (6),
les deux ailes latérales (10a, 10b) étant respectivement reliées entre elles grâce à des nervures de liaison (13), lesquelles sont disposées sur la branche médiane (2) du rail de support (1).

10. Système de barre omnibus selon l'une des revendications précédentes,
**caractérisé en ce que**
celui-ci présente, pour la liaison des deux profils électroconducteurs de deux rails de support (1) successifs, un élément de connexion (31), lequel présente des évidements en forme de rainures (32) correspondant aux rainures (11) des profils électroconducteurs, dans lesquels respectivement un connecteur métallique (35) est inséré, auquel on peut raccorder depuis les deux côtés les fils (6) à disposer dans les rainures (11) des profils électroconducteurs et à relier entre eux.

11. Système de barre omnibus selon la revendication 10,
**caractérisé en ce que**
les connecteurs métalliques (35) se composent d'une lamelle de contact oblongue (37), aux extrémités de laquelle respectivement un élément de ressort en forme de U (38) pour la fixation des fils (6) à raccorder au connecteur métallique (35) est disposé.

12. Système de barre omnibus selon la revendication 10 ou 11,
**caractérisé en ce que**
celui-ci présente un rail de connexion en forme de U (30) pour relier deux rails de supports (1), lequel est en prise à l'intérieur dans les deux rails de support (1) et sur les branches latérales (30a, 30b) duquel respectivement un élément de connexion (31) est disposé.

13. Système de barre omnibus selon l'une des revendications précédentes,
**caractérisé en ce que**
l'espace intérieur du rail de support en forme de U (1) sert d'espace de logement pour des appareils d'exploitation des luminaires ainsi que pour des éléments de contact correspondants.

14. Elément de contact pour le raccordement d'un luminaire à un système de barre omnibus, lequel présente plusieurs rails de support en forme de U (1) pouvant être reliés les uns aux autres de manière modulaire ainsi qu'un profil électroconducteur disposé sur au moins l'un des deux côtés intérieurs des parois latérales (3a, 3b) des rails de support (1), lequel présente des rainures (11) accessibles depuis un côté d'établissement du contact et disposées les unes au-dessus des autres pour la réception de fils (6) pour l'alimentation en courant et/ou la transmission d'instructions de commande numériques,
a) l'élément de contact (50) pouvant être inséré dans l'ouverture d'un rail de support (1) et pouvant être soumis à une torsion partielle afin de, grâce à la torsion, introduire des contacts de connexion (53, 54) de l'élément de contact (50) dans les rainures (11) du profil électroconducteur pour l'établissement du contact des fils (6),
b) au moins l'un des contacts de connexion (53) pouvant être réglé pour un établissement du contact au choix des fils (6), et
c) l'élément de contact (50) présentant un élément de fil (62) pour la mise à la terre, dont l'une des extrémités (62a) est en contact avec le luminaire et/ou un module de luminaire et dont l'autre extrémité (62b) entre en contact, après la torsion, avec un fil (6) prévu pour la mise à la terre du système de barre omnibus,
**caractérisé en ce que**
l'élément de fil (62) est guidé dans une fente (63) de l'élément de contact (50) laquelle forme une butée de forme excentrique, et **en ce que** lors de la torsion de l'élément de contact (50), l'autre extrémité (62b) de l'élément de fil (62) est pressée contre le fil (6) prévu pour la mise à la terre.

15. Elément de contact selon la revendication 14,
**caractérisé en ce que**
cet au moins un contact de connexion réglable (53) peut être réglé en hauteur.

16. Elément de contact selon la revendication 14 ou 15,
**caractérisé en ce que**
celui-ci présente des éléments de verrouillage (52) pour agripper par l'arrière des parties en saillie du rail de support (1) après la torsion.

17. Elément de contact selon l'une des revendications 14 à 16,
**caractérisé en ce que**
cet au moins un contact de connexion réglable (53) peut se mettre en prise dans des positions correspondant aux fils (6).
